# EUROPEAN PATENT APPLICATION

(11) **EP 4 715 891 A1**
(43) Date of publication of application: **25.03.2026**
(21) Application number: 25194554.9
(22) Date of filing: 07.08.2025
(51) Int. Cl.: H01M 4/134, H01M 4/1395, H01M 4/38, H01M 4/66, H01M 10/0525, H01M 10/0562, B32B 15/00

(54) **CURRENT COLLECTOR AND BATTERY**

(30) Priority: 19.09.2024 JP 2024162529
(71) Applicant: TOYOTA JIDOSHA KABUSHIKI KAISHA, Toyota-shi, Aichi-ken 471-8571 (JP)
(72) Inventor: NISHIMURA, Hideaki, Toyota-shi, Aichi-ken,, 471-8571 (JP); KAWAKAMI, Masatsugu, Toyota-shi, Aichi-ken,, 471-8571 (JP); WASEDA, Tetsuya, Toyota-shi, Aichi-ken,, 471-8571 (JP)
(74) Representative: Winter, Brandl - Partnerschaft mbB

(57) **Abstract**

The current collector includes: a first layer that includes Al; a second layer that is disposed on the first layer and includes a metal element M, the metal element M having an oxidation-reduction potential based on Li of 2.3V or more and not being an amphoteric element; and a third layer that is disposed on the second layer and includes a resin.

## Description

### BACKGROUND

### Technical Field

The present disclosure relates to a current collector and a battery.

### Related Art

An electrode for secondary batteries, such as lithium-ion secondary batteries, generally includes a member that contains a metal and is referred to as a current collector and an electrode layer that contains an electrode active material and is disposed on the current collector.

In recent years, attempts to substitute copper, which is widely used as a material for a current collector for a negative electrode, with other metals have been conducted with the aim of reducing the production cost or the weight of batteries.

For example, Japanese Patent Application Laid-Open (JP-A) No. 2022-85523 describes a lithium ion secondary battery in which aluminum or aluminum alloy is used as a material for a current collector for a negative electrode.

While aluminum is widely used as a current collector for a positive electrode of secondary batteries, there are problems that arise when aluminum is used as a current collector for a negative electrode of secondary batteries, such as forming an alloy due to reaction caused between Al and Li elements included in the current collector.

### SUMMARY

In view of the foregoing, the present disclosure aims to provide a current collector that includes Al and exhibits a reduced value of battery resistance; and a battery that includes the foregoing current collector.

The means for solving the above-described problem includes the following embodiments.
<1> A current collector, including:
   a first layer that includes Al;
   a second layer that is disposed on the first layer and includes a metal element M, the metal element M having an oxidation-reduction potential based on Li of 2.3V or more and not being an amphoteric element; and
   a third layer that is disposed on the second layer and includes a resin.
<2> The current collector according to <1>, wherein the metal element M includes at least one selected from the group consisting of Ni, Cr and Fe;
<3> The current collector according to <1> or <2>, which is used as a current collector of a solid-state battery.
<4> A battery, comprising a configuration in which a first current collector, a first electrode layer, an intermediate layer, a second electrode layer and a second current collector are disposed in this order, the first current collector including;
   a first layer that includes Al;
   a second layer that is disposed on the first layer and includes a metal element M, the metal element M having an oxidation-reduction potential based on Li of 2.3V or more and not being an amphoteric element; and
   a third layer that is disposed on the second layer and includes a resin, the third layer being in contact with the first electrode layer.
<5> The battery according to <4>, wherein the metal element M includes at least one selected from the group consisting of Ni, Cr and Fe.
<6> The battery according to <4> or <5>, wherein the intermediate layer includes a solid electrolyte.
<7> The battery according to any one of <4> to <6>, wherein the first electrode layer includes an electrode active material, the electrode active material including at least one selected from the group consisting of Si and C.

According to the present disclosure, a current collector that includes Al and exhibits a reduced value of battery resistance; and a battery that includes the foregoing current collector are provided.

### BRIEF DESCRIPTION OF THE DRAWINGS

Exemplary embodiments of the present disclosure will be described in detail based on the following figures, wherein:
FIG. 1 is an electron microscope image illustrating an example of a layered structure of a current collector;
FIG. 2 is a sectional view schematically illustrating an example of an electrode layered structure included in a battery; and
FIG. 3 is a sectional view schematically illustrating an example of an electrode layered structure included in a battery.

### DETAILED DESCRIPTION

In the following, embodiments are explained as an example of the present disclosure. It is noted that the explanation and the examples are given for the aim of illustration of the embodiments, and the scope of the present disclosure is not limited thereto.

In the present disclosure, a numerical value range expressed by using "(from) ... to ...", means a range in which the numerical values before and after the word "to" are included as the minimum value and the maximum value, respectively.

In the numerical value ranges that are expressed in a stepwise manner in the present disclosure, the upper limit value or the lower limit value described in a given numerical value range may be replaced with the upper limit value or the lower limit value of another numerical value range that is expressed in a stepwise manner. In the numerical value ranges described in the present disclosure, the upper limit value or the lower limit value described in a given numerical range may be replaced with a value shown in the examples.

In the present disclosure, when there are plural kinds of substances that correspond to the same component in a composition, the amount of the component refers to a total component of the substances included in the composition.

In the present disclosure, a combination of two or more preferred embodiments refers to a more preferred embodiment.

In the present disclosure, the term "step" includes not only an independent step, but also a step that cannot be clearly distinguished from another step as long as the intended purpose of the step is achieved.

### <Current Collector>

An embodiment of the present disclosure is a current collector that includes:
a first layer that includes Al;
a second layer that is disposed on the first layer and includes a metal element M, the metal element M having an oxidation-reduction potential based on Li of 2.3V or more and not being an amphoteric element; and
a third layer that is disposed on the second layer and includes a resin.

As shown in the Examples described later, a battery using a current collector, having a first layer including Al as a chemical element, a second layer that is disposed on the first layer and including a metal element M, and a third layer that is disposed on the second layer and includes a resin, exhibits an effect of suppressing the reaction between Al and Li ions, and exhibits a lower battery resistance, as compared with a battery using a current collector that does not satisfy the foregoing conditions. The reason for this is thought to be as follows, for example.

In the current collector of the present disclosure, the second layer that includes the metal element M that is not an amphoteric element is disposed on the first layer that includes Al. The second layer suppresses a reaction between Al and Li ions included in the first layer.

Further, in the current collector of the present disclosure, the third layer that includes a resin is disposed on the second layer. The third layer increases the adhesion force of the current collector with respect to an electrode layer that includes an electrode active material, in addition to suppressing the reaction between Al element and Li ions included in the first layer in cooperation with the second layer. As a result, an increase in the battery resistivity due to separation of the electrode layer from the current collector is suppressed.

Further, since the current collector of the present disclosure is less likely to generate a compound due to a reaction with sulfur (such as copper sulfide), the current collector may be suitably used for a battery in which a sulfide is used as an electrolyte.

While the current collector of the present disclosure may be used as a current collector for a positive electrode (positive-electrode current collector) or as a current collector for a negative electrode (negative-electrode current collector), the effect of suppressing the reaction between Al element and Li ions is more remarkable when the current collector is used as a current collector for a negative electrode.

Further, aluminum has a smaller mass per unit volume than copper. Therefore, replacing a current collector made of copper with the current collector of the present disclosure contributes to reduction in weight of the battery.

Further, aluminum is less precious than copper. Therefore, replacing a current collector made of copper with the current collector of the present disclosure serves to reduce or stabilize the production cost of the battery.

### (First layer)

The material of the first layer is not particularly limited as long as Al is included therein, and may be selected in consideration of the desired properties of the current collector, such as electric conductivity and strength.

For example, the rate of Al with respect to the total metal element in the first layer may be 50% by mass or more, 60% by mass or more, or 70% by mass or more.

For example, the rate of Al with respect to the total metal element in the first layer may be 100% by mass, 90% by mass or less, or 80% by mass or less.

The first layer may include only Al as the metal element, or the first layer may include Al and a metal element other than Al. Namely, the material of the first layer may be pure aluminum or aluminum alloy.

Specific examples of the metal element other than Al include Mn, Mg, Cr, Si, Fe, Cu, Zn and Ti.

The thickness of the first layer is not particularly limited, and may be selected in consideration of the type or scale of the battery obtained using the current collector.

For example, the thickness of the first layer may be 5 µm or more, 10 µm or more, or 20 µm or more.

For example, the thickness of the first layer may be 100 µm or less, 70 µm or less, or 50 µm or less.

### (Second layer)

The material of the second layer is not particularly limited as long as the metal element M, having an oxidation-reduction potential based on Li of 2.3V or more and not being an amphoteric element, is included therein, and the material may be selected in consideration of the desired properties of the current collector, such as electric conductivity and strength.

Specific examples of the metal element M included in the second layer include Ni (2.8V), Cr (2.3V), Fe (2.6V) and Co (2.8V). The value in the parenthesis refers to the oxidation-reduction potential based on Li of the corresponding metal element.

The metal element M is preferably Ni, Cr or Fe, more preferably Ni.

The second layer may include a single kind of metal element M, or the second layer may include two or more kinds thereof.

The second layer may include only the metal element M as the metal element, or the second layer may include the metal element M and a metal element other than the metal element M (i.e., a metal element that is not an amphoteric element and has an oxidation-reduction potential based on Li of less than 2.3V, or a metal element that is an amphoteric element).

From the viewpoint of suppressing the reaction between Li ions and Al element included in the first layer, the rate of the metal element M with respect to the total metal element in the second layer is preferably 70% by mass or more, more preferably 80% by mass or more, further preferably 90% by mass or more.

The thickness of the second layer is not particularly limited, and may be selected in consideration of the type or scale of the battery obtained using the current collector.

For example, the thickness of the second layer may be 0.1 µm or more, 0.5 µm or more, or 1 µm or more.

For example, the thickness of the second layer may be 10 µm or less, 5 µm or less, or 3 µm or less.

While the effect of suppressing the reaction between Al element and Li ions tends to be increased as the thickness of the second layer is increased, the increase in the thickness of the second layer may increase the production cost of the battery. The current collector of the present disclosure can suppress the reaction between Al element and Li ions in an effective manner without increasing the thickness of the second layer, by way of disposing the third layer on the second layer.

The method for disposing the second layer on the first layer is not particularly limited. Examples of the method for disposing the second layer on the first layer include a method in which the second layer is formed on the first layer by way of plating, vapor deposition, application or the like, and a method in which a metal foil that serves as the second layer is attached to a metal foil that serves as the first layer.

From the viewpoint of controlling the thickness of the second layer, ensuring the adhesion force of the second layer to the first layer, production efficiency or the like, the method of forming the second layer is preferably plating or vapor deposition, more preferably plating.

As necessary, a concavo-convex structure may be formed at the surface of the second layer. By forming a concavo-convex structure at the surface of the second layer, for example, it is possible to increase the adhesion force of the current collector to the electrode layer.

The second layer may cover the entirety of the surface of the first layer, or may cover a part of the surface of the first layer. From the viewpoint of effectively suppressing the reaction between Li ions and Al element included in the first layer, the surface coverage of the first layer by the second layer is preferably 50% or more, 70% by more, 80% or more, or 100%.

The foregoing coverage refers to a percentage of the value obtained by dividing the area of the second layer by the area of the first layer.

### (Third layer)

The material of the third layer is not particularly limited as long as a resin is included therein, and the material may be selected in consideration of the desired properties of the current collector, such as electrical conductivity and strength.

From the viewpoint of suppressing an increase in the battery resistivity, the third layer preferably exhibits electric conductivity.

The material of the third layer that exhibits electric conductivity is not particularly limited, and examples thereof include a combination of a resin and a substance that exhibits electric conductivity, and a resin that exhibits electric conductivity.

Examples of the resin included in the third layer include polyvinyl chloride, polyvinyl acetate, polyvinylidene chloride, polyvinyl alcohol, polyvinylidene fluoride, polyethylene, polypropylene, ethylene-vinyl acetate copolymer, polystyrene, polyurethane, polyamide, polyester, polytetrafluoroethylene, ABS resin, AS resin, acrylic resin, and resins that exhibit electric conductivity.

Examples of the resin that exhibits electric conductivity include polyaniline, polypyrrole, polythiophene, polyacetytlene, poly(p-phenylene), polyphenylene vinylene, polyacrylonitrile, and polyoxadiazole.

From the viewpoint of the adhesion force of the current collector to the electrode layer, the third layer preferably includes a thermoplastic resin, more preferably a vinyl resin. In the present disclosure, the vinyl resin refers to a resin obtained by polymerizing a monomer having a vinyl group.

Examples of the substance that exhibits electric conductivity include carbon materials, metals, oxides that exhibit electric conductivity and nitrides that exhibit electric conductivity.

Specific examples of the carbon materials include graphite, carbon black (such as acetylene black, thermal black and furnace black), carbon nanotubes (CNT), carbon nanofibers (CNF) and vapor-grown carbon fibers (VGCF^{™}).

From the viewpoint of increasing the adhesion force of the current collector to the electrode layer, the third layer preferably includes a carbon material.

The thickness of the third layer is not particularly limited, and the thickness may be selected in consideration of the type or scale of the battery obtained using the current collector.

For example, the thickness of the third layer may be 0.1 µm or more, 0.5 µm or more, or 1 µm or more.

For example, the thickness of the third layer may be 10 µm or less, 5 µm or less, or 3 µm or less.

For example, the total thickness of the current collector may be 5 µm or more, 10 µm or more, or 20 µm or more.

For example, the total thickness of the current collector may be 120 µm or less, 80 µm or less, or 60 µm or less.

From the viewpoint of increasing the adhesion force of the current collector to the electrode layer, the third layer is preferably capable of deforming in response to the shape of the electrode active material at an interface with the electrode layer. When the third layer is deformable in response to the shape of the electrode active material, the electrode active material that enters the third layer exhibits an anchoring effect, whereby the separation of the electrode layer from the current collector is suppressed in a more effective manner.

### (Layer structure of current collector)

The current collector of the present disclosure may be in a state in which the second layer and the third layer are disposed at one surface of the first layer (layer structure: first layer / second layer / third layer) or a state in which the second layer and the third layer are disposed at both surfaces of the first layer (layer structure: third layer / second layer / first layer / second layer / third layer).

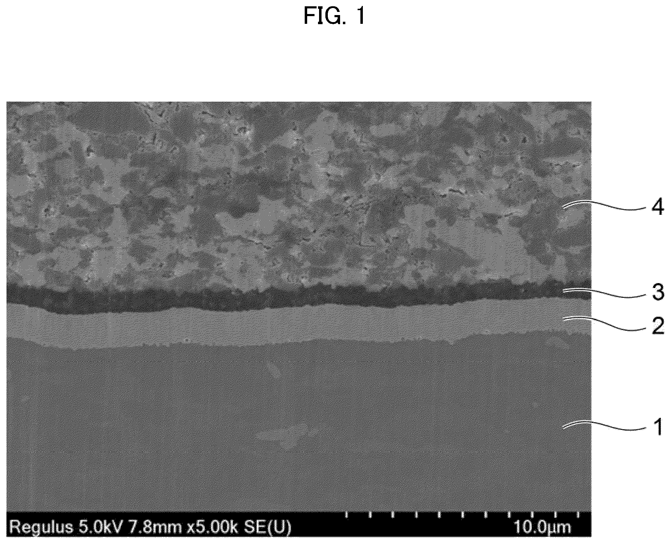

FIG. 1 is an electron microscopic image showing an example of the layer structure of the current collector of the present disclosure.

As shown in FIG. 1, the current collector is in a state in which an aluminum foil 1 as the first layer, a nickel-plated layer 2 as the second layer, and a resin layer 3 as the third layer are layered. The resin layer 3 is located adjacent to a negative electrode layer 4 as the electrode layer. The interface between the resin layer 3 and the negative electrode layer 4 is in a state in which the resin layer 3 is deformed in response to the shape of silicon particles included in the negative electrode layer 4 as the active material.

The current collector of the present disclosure may have a configuration in which one of the surfaces functions as a positive-electrode current collector and the other one of the surfaces functions as a negative-electrode current collector, respectively. The current collector having the foregoing configuration may be used as a current collector for a battery having a bipolar structure, for example.

When the current collector of the present disclosure has a configuration in which one of the surfaces functions as a positive-electrode current collector and the other one of the surfaces functions as a negative-electrode current collector, the current collector preferably has the second layer and the third layer at least at the surface that functions as the negative-electrode current collector.

The current collector of the present disclosure may have an electrode layer to be disposed at one or both of the surfaces of the current collector. When the current collector has electrode layers at both surfaces of the current collector, the current collector may have a configuration in which both of the electrode layers are either a positive electrode or a negative electrode, or may have a configuration in which one of the electrode layers is a positive electrode and the other one of the electrode layer is a negative electrode.

The current collector having a configuration in which both of the electrode layers disposed at the surfaces of the current collector are either a positive electrode or a negative electrode is applied to a battery having a monopolar structure, for example.

The current collector having a configuration in which one of the electrode layers is a positive electrode and the other one of the electrode layers is a negative electrode is applied to a battery having a bipolar structure, for example.

The electrode layer disposed at one or both of the surfaces of the current collector may be in contact with the surface of the current collector at which the third layer is disposed. The electrode layer that is in contact with the surface of the current collector at which the third layer is disposed may be either a positive electrode layer or a negative electrode layer. From the viewpoint of achieving the effect of the present disclosure, i.e., suppressing the reaction between Li ions and Al element included in the first layer, the electrode layer that is in contact with the surface of the current collector at which the third layer is disposed is preferably a negative electrode layer.

The battery to which the current collector of the present disclosure is applied may have a configuration in which a liquid-type electrolyte is used as the electrolyte, a configuration in which a solid-type electrolyte is used as the electrolyte, or a configuration in which only a solid-type electrolyte is used as the electrolyte.

In the present disclosure, a battery in which a solid-type electrolyte is used at least a part of the electrolyte may be referred to as a "solid-state battery", and a battery in which only a solid-type electrolyte is used as the electrolyte may be referred to as an "all-solid-state battery".

### <Battery>

An embodiment of the present disclosure is a battery, including a configuration in which a first current collector, a first electrode layer, an intermediate layer, a second electrode layer and a second current collector are disposed in this order, the first current collector including;
a first layer that includes Al;
a second layer that is disposed on the first layer and includes a metal element M, the metal element M having an oxidation-reduction potential based on Li of 2.3V or more and not being an amphoteric element; and
a third layer that is disposed on the second layer and includes a resin, the third layer being in contact with the first electrode layer.

In the present disclosure, the configuration in which the first current collector, the first electrode layer, the intermediate layer, the second electrode layer and the second current collector are disposed in this order may be referred to as the electrode layered structure.

In the present disclosure, the first current collector and the second current collector may be referred to as the "current collector" without distinguishing the same, and the first electrode layer and the second electrode layer may be referred to as the "electrode layer" without distinguishing the same.

In the battery of the present disclosure, the second current collector serves as the positive-electrode current collector when the first current collector serves as the negative-electrode current collector, and the second current collector serves as the negative-electrode current collector when the first current collector serves as the positive-electrode current collector.

In the battery of the present disclosure, while the first current collector may be either the negative-electrode current collector or the positive-electrode current collector, the effect of suppressing the reaction between Al element and Li ions is more remarkable when the first current collector is the negative-electrode current collector.

In the battery of the present disclosure, while the first electrode layer may be either the negative electrode layer or the positive electrode layer, the effect of suppressing the reaction between Al element and Li ions is more remarkable when the first electrode layer is the negative electrode layer.

In the battery of the present disclosure, while the type of the electrode active material included in the first electrode layer is not particularly limited, the effect of suppressing the reaction between Al element and Li ions is more remarkable when the electrode active material included in the first electrode layer includes at least one selected from the group consisting of Si and C.

In the battery of the present disclosure, the details and preferred embodiments of the first current collector are the same as the foregoing details and preferred embodiments of the current collector of the present disclosure.

The number of current collectors that satisfy the conditions of the first current collector included in the battery of the present disclosure is not particularly limited.

From the viewpoint of achieving the effect of suppressing the reaction between Al element and Li ions in an effective manner, the rate in number of current collectors that satisfy the conditions of the first current collector is preferably 25% or more, more preferably 35% or more, further preferably 40% or more, with respect to the total current collectors included in the battery of the present disclosure.

When the first current collector serves as the negative-electrode current collector, the rate in number of negative-electrode current collectors that satisfy the conditions of the first current collector is preferably 50% or more, more preferably 70% or more, further preferably 80% or more, with respect to the total negative-electrode current collectors included in the battery of the present disclosure.

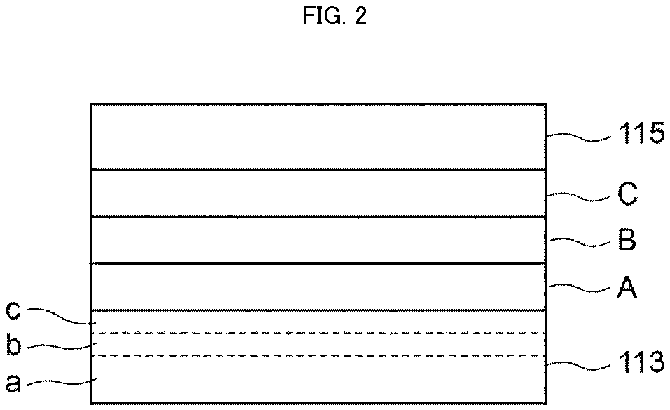

FIG. 2 is a sectional view schematically showing an example of the configuration of the electrode layered structure included in the battery of the present disclosure.

The electrode layered structure shown in FIG. 2 has a configuration in which the first current collector 113, the first electrode layer A, the intermediate layer B, the second electrode layer C and the second current collector 115 are disposed in this order.

The first current collector 115 includes the first layer a that includes Al, the second layer b that includes a metal element M, and the third layer c that is disposed on the second layer b and includes a resin. The third layer c is in contact with the first electrode A.

### (Current collector)

The type of the current collector that constitutes the electrode layered structure is not particularly limited, as long as the first current collector satisfies the foregoing conditions, and may be selected from known current collectors.

Specific examples of the material for the current collector include a metal selected from Ag, Cu, Au, Al, Ni, Fe and Ti, and an alloy including the foregoing metal.

The thickness of the current collector is not particularly limited, and the thickness may be selected in consideration of the type or scale of the battery obtained using the current collector.

For example, the total thickness of the current collector may be 5 µm or more, 10 µm or more, or 20 µm or more.

For example, the total thickness of the current collector may be 120 µm or less, 80 µm or less, or 60 µm or less.

### (Electrode layer)

The type of the electrode layer that constitutes the electrode layered structure is not particularly limited, and may be selected from known electrode layers.

The electrode layer includes at least an electrode active material, and may optionally include a binder, an electroconductive material, a solid electrolyte, and the like.

When the intermediate layer includes a solid electrolyte, at least one of the first electrode layer and the second electrode layer that are disposed at each side of the intermediate layer may include a solid electrolyte.

In the present disclosure, the electrode active material included in the first electrode layer may be referred to as the "first electrode active material" and the electrode active material included in the second electrode layer may be referred to as the "second electrode active material".

The first electrode active material serves as a negative-electrode active material when the first electrode layer is the negative electrode layer, or the first electrode active material serves as a positive-electrode active material when the first electrode layer is the positive electrode layer.

The second electrode active material serves as a negative-electrode active material when the second electrode layer is the negative electrode layer, or second electrode active material serves as a positive-electrode active material when the second electrode layer is the positive electrode layer.

Specific examples of the negative-electrode active material include carbon materials, Si-containing active materials, metallic lithium, lithium-containing alloy, metals or alloys capable of forming an alloy with lithium, oxides, and transition metal nitrides.

Specific examples of the carbon material include graphite, amorphous carbon materials, carbon black, and activated carbon. Examples of the graphite include natural graphite and artificial graphite. Examples of the amorphous carbon material include hard carbon, soft carbon, coke, mesocarbon microbeads (MCMB) and mesophase pitch carbon fiber (MCF). The graphite materials may be covered with metal or amorphous carbon.

Specific examples of the Si-containing active material include a simple substance of silicon, silicon alloys (such as alloys formed of Si and at least one metal selected from the group consisting of Sn, Ti, Fe, Ni, Cu, Co and Al), porous silicon, silicon clathrate compounds, and silicon oxide.

Specific examples of the positive-electrode active material include a composite oxide including lithium and a transition metal (hereinafter, also referred to as the composite oxide).

Examples of the composite oxide include composite oxides having a lamellar crystal structure, composite oxides having a spinel-type crystal structure, and composite oxides having an olivine-type crystal structure.

Specific examples of the composite oxide having a lamellar crystal structure include a compound represented by LiMO₂ (M is at least one transition metal selected from the group consisting of Ni, Co and Mn) and a compound obtained by adding a different element to the compound represented by LiMO₂. Representative examples of the composite oxide having a lamellar crystal structure include LCO (lithium cobalt oxide), NCM (lithium nickel manganese cobalt oxide) and NCA (lithium nickel oxide or lithium nickel cobalt aluminum oxide).

Specific examples of the composite oxide having a spinel-type crystal structure include LiMn₂O₄.

Specific examples of the composite oxide having an olivine-type crystal structure include LiMPO₄ (M is Fe, Co, Ni or Mn).

The electrode active material included in the electrode layer may be a single kind or a combination of two or more kinds.

The electrode active material may be in the form of fibers, spheres, flakes, and the like.

The volume average particle size of the electrode active material may be selected from the range of from 5 µm to 50 µm. The volume average particle size of the electrode active material is a value at which the accumulation of the particle size from the side of small diameter is 50% in the volume-based particle size distribution (D50) obtained by a laser diffraction scattering method.

Specific examples of the binder include polyvinylidene fluoride (PVdF), polyethylene, polypropylene, polyethylene terephthalate, cellulose, nitrocellulose, carboxymethyl cellulose, polyethylene oxide, polyepichlorohydrin, polyacrylonitrile, styrene-butadiene rubber (SBR), acrylonitrile-butadiene rubber (NBR), polyacrylate, polymethacrylate, and polytetrafluoroethylene (PTFE).

Examples of the electroconductive material include carbon materials, metals, oxides that exhibit electric conductivity and nitrides that exhibit electric conductivity.

Specific examples of the carbon material include graphite, carbon black (such as acetylene black, thermal black and furnace black), carbon nanotube (CNT), carbon nanofiber (CNF) and vapor-grown carbon fiber (VGCF^{™}).

The electroconductive material may be used alone or in combination of two or more kinds.

Examples of the solid electrolyte include sulfide solid electrolytes, oxide solid electrolytes, and polymer solid electrolytes.

The solid electrolyte is preferably sulfide solid electrolytes or polymer solid electrolytes from the viewpoint of battery performances, more preferably sulfide solid electrolytes from the viewpoint of thermal stability.

The solid electrolyte may be used alone or in combination of two or more kinds.

Examples of the sulfide solid electrolyte include a compound that includes a metal element that serves as a conductive ion and sulfur (S).

Examples of the metal element include Li, Na, K, Mg and Ca. Among these, the metal element is preferably Li.

The sulfur solid electrolyte may include, in addition to Li and S, at least one selected from the group consisting of P, Si, Ge, Al and B. The sulfur solid electrolyte is preferably a compound including Li, S and P (hereinafter, also referred to as LPS-type sulfur solid electrolyte).

From the viewpoint of ionic conductivity, the sulfur solid electrolyte may include a halogen element such as Cl, Br or I. From the viewpoint of chemical stability, the sulfur solid electrolyte may include oxygen (O).

Specific examples of the LPS-type sulfur solid electrolyte include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, LiI-Li₂S-P₂O₅, LiI-Li₃PO₄-P₂S₅, LiBr-LiI-Li₂S-P₂S₅, Li₂S-P₂S₅-ZₘSₙ (each of m and n is a positive number and Z is Ge, Zn or Ga), Li₂S-GeS₂, Li₂S-SiS₂-Li₃PO₄, Li₂S-SiS₂-LiₓMO_{y} (each of x and y is a positive number and M is P, Si, Ge, B, Al, Ga or In).

The description Li₂S-P₂S₅ refers to a sulfur solid electrolyte obtained using Li₂S and P₂S₅ as the raw materials, and the same applies to the other descriptions.

The LPS-type sulfur solid electrolyte is preferably a sulfur solid electrolyte obtained using Li₂S and P₂S₅ as the raw materials, more preferably a sulfur solid electrolyte that satisfies the following formula.

Li_{3+x+5y}P_{1-y}S₄ (0 < x ≤ 0.6, 0 < y ≤ 0.2)

Examples of the oxide solid electrolyte include a compound having a NASICON-type crystal structure (Na₃Zr₂PSi₂O₁₂). The compound having a NASICON-type crystal structure has a high degree of ionic conductivity and is highly stable in the air.

Examples of the compound having a NASICON-type crystal structure include a phosphoric salt including lithium. Specific examples of the phosphoric salt include a composite lithium phosphate with Ti (for example, Li₁₊ₓAlₓTi₂₋ₓ(PO₄)₃) and a compound obtained by substituting at least a part of Ti in the composite lithium phosphate with a quadrivalent transition metal such as Ge, Sn, Hf or Zr, or with a trivalent transition metal such as Al, Ga, In, Y or La.

Specific examples of the compound having a NASICON-type crystal structure include Li-Al-Ge-P-O materials (Li₁₊ₓAlₓGe₂₋ₓ(PO₄)₃), Li-Al-Zr-P-O materials (Li₁₊ₓAlₓZr₂₋ₓ(PO₄)₃) and Li-Al-Ti-P-O materials (Li₁₊ₓAlₓTi₂₋ₓ(PO₄)₃).

Examples of the polymer solid electrolyte include a mixture of a polymer compound and an electrolyte salt. Specific examples of the polymer compound include polyether-type polymer compounds such as polyethylene oxide (PEO) and polypropylene oxide (PPO), polyamine-type polymer compounds such as polyethyleneimine (PEI) and polysulfide-type polymer compound such as poly(alkylene sulfide) (PAS). Among these, the polymer solid electrolyte is preferably a polyether-type polymer compound.

### (Intermediate layer)

Examples of the intermediate layer used in the battery of the present disclosure include a separator for a battery in which a liquid-type electrolyte is used, and an electrolyte layer for an all-solid-state battery.

In the present disclosure, the electrolyte layer refers to a layer that includes a solid electrolyte.

The thickness of the intermediate layer is not particularly limited, and the thickness may be selected from a range of 1 µm to 30 µm.

When the intermediate layer is a separator, the type of the separator is not particularly limited, and may be selected from known separators.

Specific examples of the separator include a porous sheet formed of resin such as polyethylene, polypropylene, polymethylpentene, polyester, cellulose or polyamide.

When the intermediate layer is an electrolyte layer, the type of the solid electrolyte included in the electrolyte layer is not particularly limited. For example, the electrolyte layer may include the foregoing solid electrolyte that may be included in the electrode layer.

When the intermediate layer is an electrolyte layer, each of the first electrode layer and the second electrode layer may include a solid electrolyte, respectively. In that case, the type of the solid electrolyte included in each layer may be the same or different from each other.

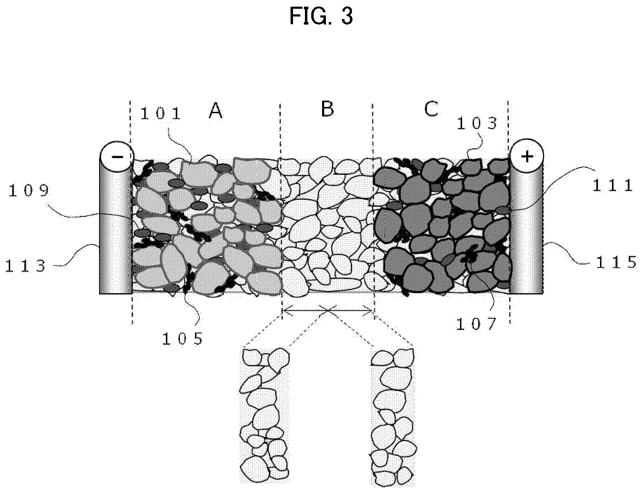

FIG. 3 is a sectional view schematically showing an example of the electrode layered structure in which the electrolyte layer serves as the intermediate layer.

The electrode layered structure shown in FIG. 3 includes the first current collector 113, the first electrode layer A, the electrolyte layer B, the second electrode layer C, and the second current collector 115.

The first electrode layer A includes the first electrode active material 101, the electroconductive material 105, the binder 109 and the solid electrolyte 102. The second electrode layer C includes the second electrode active material 103, the electroconductive material 107, the binder 111 and the solid electrolyte 102.

The electrolyte layer B includes a solid electrolyte. The electrolyte layer B may have a monolayer structure or multilayer structure consisting of two or more layers.

When the battery of the present disclosure includes a solid electrolyte, the battery may include an electrolyte solution at a content of less than 10% by mass with respect to the total amount of the electrolyte, together with the solid electrolyte.

When the battery of the present disclosure includes a solid electrolyte, the solid electrolyte may be a composite solid electrolyte that includes an inorganic solid electrolyte and a polymer electrolyte.

When the battery of the present disclosure includes a liquid electrolyte as the electrolyte, the type of the liquid electrolyte is not particularly limited, and may be selected from known liquid electrolytes.

Specific examples of the liquid electrolyte include a solution in which a lithium salt such as LiPF₆ or LiFSi is dissolved in an organic solvent.

Specific examples of the organic solvent include cyclic or linear carbonates such as ethylene carbonate (EC), dimethyl carbonate (DMC), diethyl carbonate (DEC) and ethyl methyl carbonate (EMC). The solvent may be a mixture of two or more solvents, or may be a mixture including a cyclic carbonate and a linear carbonate.

The solvent may include an additive such as vinylene carbonate (VC).

### (Housing)

The battery of the present disclosure may have a housing. The housing accommodates at least the foregoing electrode laminate body. Examples of the housing include a laminate-type housing and a case-type housing. The laminate-type housing may be formed of a laminate body composed of a metal layer including a metal such as aluminum and a heat-seal layer including a resin that melts by heating (laminate film).

### (Brace)

The battery of the present disclosure may have a brace. The brace applies a pressure to the electrode laminate body in a thickness direction.

For example, the pressure applied to the electrode laminate body in a thickness direction may be 0.1 MPa or more, 1 MPa or more, or 5 MPa or more.

For example, the pressure applied to the electrode laminate body in a thickness direction may be 100 MPa or less, 50 MPa or less, or 20 MPa or less.

### <Application of battery>

The application of the battery of the present disclosure is not particularly limited. Representative examples include a power source for automobiles, electronic devices, electricity storage systems and the like. The application of the battery of the present disclosure is preferably a power source of automobiles, more preferably a power source for driving hybrid vehicles, plug-in hybrid vehicles or electric vehicles.

Examples of the automobiles include electric four-wheel vehicles, electric two-wheel vehicles, gasoline vehicles and diesel vehicles. Examples of the electric four-wheel vehicle include battery electric vehicles (BEV), plug-in hybrid vehicles (PHEV) and hybrid vehicles (HEV). Examples of the electric two-wheel vehicle include electric bikes and battery-assisted bicycles.

### EXAMPLES

In the following, embodiments of the present disclosure are described by referring to the Examples. It is noted that the present disclosure is not limited to the Examples. The details of the materials referred to as the abbreviated names are as follows.
SE: sulfur solid electrolyte with a composition represented by Li₂S-P₂S₅
NCA: positive-electrode active material with a composition represented by LiNi_{0.8}Co_{0.15}Al_{0.05}O₂
NBR: acrylonitrile butadiene rubber
PVdF: polyvinylidene fluoride
VGCF: vapor-grown carbon fiber
SUS: stainless steel

### <Example 1>

### (Preparation of negative-electrode current collector)

An aluminum foil having a nickel-plated layer on one surface was used as the material for the negative-electrode current collector.

A slurry for resin layer was prepared by adding a solvent (2-ethylhexanol) to a mixture of vinyl resin (80 parts by mass) and carbon black (20 parts by mass).

The slurry for resin layer was applied onto the nickel-plated layer of the aluminum foil by a blade method and dried, thereby obtaining the negative-electrode current collector in which the resin layer is formed on the nickel-plated layer of the aluminum foil.

The aluminum foil, the nickel-plated layer and the resin layer, observed in an image of the section of the negative-electrode current collector obtained with a scanning electron microscope (SEM), had thicknesses of 15 µm, 0.7 µm and 2 µm, respectively.

The value of resistance of a sample obtained from the slurry for resin layer alone was measured by four-terminal sensing. The result was 10 Ω·cm, indicating that the sample exhibits electric conductivity.

### (Formation of negative electrode layer)

A slurry for negative electrode was prepared by adding a solvent (butyl lactate) to a mixture of silicon (49 parts by mass), SE (41.2 parts by mass), VGCF (7.5 parts by mass) and PVdF (6.6 parts by mass). The slurry for negative electrode was applied onto the resin layer of the negative-electrode current collector and dried, thereby forming the negative electrode layer.

### (Preparation of negative-electrode laminate body)

An SE slurry was prepared by adding a solvent (heptane and butyl lactate) to a mixture of SE (99.4 parts by mass) and NBR (0.6 parts by mass). The SE slurry was applied onto an SUS foil and dried, thereby forming an electrolyte layer (SE layer).

The SUS foil on which the SE layer was formed was disposed on the negative electrode layer formed on the negative-electrode current collector, and pressing was performed at 50 kN/cm and 160 °C. Thereafter, the SUS foil was removed to transfer the SE layer 1 to the negative electrode layer.

Further, a different SUS foil having an SE layer formed thereon was disposed on the SE layer 1, and preliminary pressing was performed at 100 MPa and 25 °C. The SUS foil was removed to transfer the SE layer 2 to the SE layer 1, thereby obtaining the negative-electrode laminate body (layer structure: negative-electrode current collector / negative electrode layer / SE layer 1 / SE layer 2).

### (Preparation of positive-electrode laminate body)

A slurry for positive electrode was prepared by adding a solvent (butyl lactate) to a mixture of NCA as the positive-electrode active material (78.3 parts by mass), SE (18.8 parts by mass), VGCF (2.9 parts by mass) and PVdF (2.8 parts by mass). The slurry for positive electrode was applied onto an aluminum foil and dried, thereby forming a positive electrode layer.

An SUS foil having an SE layer formed thereon, obtained by the same manner as the preparation of the negative-electrode laminate body, was disposed on the positive electrode layer formed on the aluminum foil, and pressing was performed at 50 kN/cm and 160 °C. Thereafter, the SUS foil was removed to transfer the SE layer 3 to the positive electrode layer.

### (Preparation of battery laminate body for measurement of battery resistivity)

The negative-electrode laminate body was trimmed to a round shape with an area of 1.08 cm², and the positive-electrode laminate body was trimmed to a round shape with an area of 1.00 cm², respectively. Subsequently, the positive-electrode laminate body was disposed on the negative-electrode laminate body such that the SE layer 2 was in contact with the SE layer 3, and pressing was performed at 50 kN/cm and 160 °C. A battery laminate body (layer structure: negative-electrode current collector / negative-electrode layer / SE layer 1 / SE layer 2 / SE layer 2/ SE layer 3 / positive-electrode layer / positive-electrode current collector) was thus obtained.

### (Preparation of half cell for measurement of current value)

The negative-electrode current collector obtained by the foregoing process and a lithium foil as the positive-electrode current collector were trimmed to have a round shape with a diameter of 11.28 mm, respectively.

An SE pellet having a round shape with a diameter of 10 mm was prepared by disposing SE into a round hall with a diameter of 10 mm formed in a jig, and applying a pressure to the SE in the round hall at 100 MPa.

The negative-electrode current collector, the SE pellet, and the positive-electrode current collector were disposed in a cylindrical container with a diameter of 11.28 mm, and a brace was attached thereto such that a pressure of 2 MPa was applied thereto, thereby obtaining a half cell.

### <Example 2>

A negative-electrode current collector was prepared in the same manner as Example 1, except that the thickness of the nickel-plated layer formed on one side of the aluminum foil was changed from 0.7 µm to 1.6 µm. A battery laminate body was prepared in the same manner as Example 1, except that the foregoing negative-electrode current collector was used.

### <Comparative Example 1>

A negative-electrode current collector was prepared in the same manner as Example 1, except that an aluminum foil not having a nickel-plated layer was used instead of the aluminum foil having a nickel-plated layer formed on one side thereof. A battery laminate body was prepared in the same manner as Example 1, except that the foregoing negative-electrode current collector was used.

### <Comparative Example 2>

A negative-electrode current collector was prepared in the same manner as Example 1, except that the resin layer was not formed on the nickel-plated layer formed on one side of the aluminum foil. A battery laminate body was prepared in the same manner as Example 1, except that the foregoing negative-electrode current collector was used.

### <Measurement of battery resistivity>

The measurement of battery resistivity was performed by the following method, using the battery laminate bodies prepared in the Examples and Comparative Examples.

The battery laminate body was sandwiched between a pair of plates, and a distance between the plates was fixed such that a pressure of 1 MPa was applied to the battery laminate body. The battery laminate body was subjected to initial charging/discharging by a method including the following steps.
(1) charged at a constant current of 1/10 C to 4.05 V
(2) charged at a constant voltage of 4.05V to a final current of 1/100 C
(3) discharged at a constant current of 1/10C to 2.5 V
(4) discharged at a constant voltage of 2.5 V to a final current of 1/100C

The battery laminate body after performing the initial charging/discharging was charged at a constant current of 1/3C to 4.05 V, and then charged at a constant voltage of 4.05 V to a final current of 1/100 C. Thereafter, the battery laminate body was discharged at a constant current of 1/3 C to 3.29 V, and then discharged at a constant voltage of 3.29 V to a final current of 1/100 C, thereby adjusting the SOC of the battery laminate body.

The battery laminate body after adjusting the SOC was discharged at a constant current of 6 C for 5 seconds, and a battery resistivity was calculated based on the amount of voltage drop measured at this time. The values of battery resistivity of the battery laminate bodies prepared in Examples 1, 2 and Comparative Examples 1, 2 are shown in Table 1 as a relative value with respect to the battery resistivity of Comparative Example 1 as 100%.

### <Measurement of current value>

The measurement of current value was performed by the following method using the half cells prepared in the Examples and the Comparative Examples. It is determined that the smaller the current value is, the more the reaction between Al element and Li ions is suppressed.

The half cell was subjected to a current voltage of 0.15 V using an electrochemical measurement device (VMP-300, TOYO Corporation) and a current value after 100 hours was measured. The current values of Examples 1, 2 and Comparative Examples 1, 2 are shown in Table 1 as a relative value with respect to the current value of Comparative Example 1 as 100%.

**Table 1**

| | Example 1 | Example 2 | Comparative Example 1 | Comparative Example 2 |
|---|---|---|---|---|
| Battery Resistivity [%] | 77 | 77 | 100 | unmeasurable |
| Current Value [%] | 40 | 0 | 100 | 250 |

As shown in Table 1, the battery laminate bodies of Examples 1 and 2, in which the negative-electrode current collector has the nickel-plated layer and the resin layer formed on the aluminum foil, exhibit a smaller battery resistivity as compared with the battery laminate body of Comparative Example 1, in which the negative-electrode current collector only has the resin layer formed on the aluminum foil. The results indicate that the reaction between Li ions and Al element included in the aluminum foil is suppressed by forming the nickel-plated layer on the aluminum foil.

The battery laminate body of Comparative Example 2, in which the negative-electrode current collector has only the nickel-plated layer formed on the aluminum foil, failed to measure the battery resistivity because the battery laminate body was caused to separate from the negative electrode layer. The results indicate that the adhesion force of the negative-electrode current collector with respect to the negative electrode layer is improved by forming the resin layer on the nickel-plated layer.

As shown in Table 1, the half cells prepared in Examples 1 and 2 exhibit a smaller current value as compared with the half cells prepared in Comparative Examples 1 and 2. The results indicate that the reaction between Li ions and Al element included in the aluminum foil is suppressed in a more effective manner in Example 1 and 2 than Comparative Examples 1 and 2.

The disclosure of Japanese Patent Application No. 2024-162529 is incorporated herein by reference in its entirety.

All publications, patent applications, and technical standards mentioned in the present specification are incorporated herein by reference to the same extent as if each individual publication, patent application, or technical standard was specifically and individually indicated to be incorporated by reference.

## Claims

1. A current collector, comprising:
a first layer that includes Al;
a second layer that is disposed on the first layer and includes a metal element M, the metal element M having an oxidation-reduction potential based on Li of 2.3V or more and not being an amphoteric element; and
a third layer that is disposed on the second layer and includes a resin.

2. The current collector according to claim 1, wherein the metal element M includes at least one selected from the group consisting of Ni, Cr and Fe;

3. The current collector according to claim 1 or claim 2, which is used as a current collector of a solid-state battery.

4. A battery, comprising a configuration in which a first current collector, a first electrode layer, an intermediate layer, a second electrode layer and a second current collector are disposed in this order, the first current collector comprising;
a first layer that includes Al;
a second layer that is disposed on the first layer and includes a metal element M, the metal element M having an oxidation-reduction potential based on Li of 2.3V or more and not being an amphoteric element; and
a third layer that is disposed on the second layer and includes a resin, the third layer being in contact with the first electrode layer.

5. The battery according to claim 4, wherein the metal element M includes at least one selected from the group consisting of Ni, Cr and Fe.

6. The battery according to claim 4 or claim 5, wherein the intermediate layer includes a solid electrolyte.

7. The battery according to any one of claim 4 to claim 6, wherein the first electrode layer includes an electrode active material, the electrode active material including at least one selected from the group consisting of Si and C.
